# EUROPÄISCHE PATENTSCHRIFT

(11) **EP 0 450 739 B1**
(45) Veröffentlichungstag und Bekanntmachung des Hinweises auf die Patenterteilung: **18.05.1994**
(21) Anmeldenummer: 91250074.1
(22) Anmeldetag: 15.03.1991
(51) Int. Cl.: A01G 31/00, C09K 17/00, C05G 3/00, C04B 38/10

(54) **Verfahren zum Herstellen eines Pflanzensubstrates**
Process for the fabrication of a plant substrate
Procédé pour la fabrication d'un substrat pour plantes

(30) Priorität: 05.04.1990 DE 4011255
(43) Veröffentlichungstag der Anmeldung: 09.10.1991
(73) Patentinhaber: EFFEM GmbH, D-27283 Verden (DE)
(72) Erfinder: Lang, Rüdiger, W-5401 Brey (DE); Czempik, Klaus, Dr., W-4950 Minden (DE); Hornig, Rolf, W-2816 Kirchlinteln (DE)
(74) Vertreter: Goddar, Heinz J., Dr.

(56) Entgegenhaltungen:
- WO-A-90/01259
- DE-A- 1 508 485
- DE-A- 3 207 623
- DE-C- 557 324
- FR-A- 2 365 536
- GB-A- 695 795
- GB-A- 1 101 460

## Beschreibung

Die Erfindung betrifft ein Verfahren zum Herstellen eines porösen Keramikgranulates mit Porengrößen von < 1 mm, bei dem Ton; Kalkspat, Quarzsand, Dolomit, Feldspat, Schamotte, Kieselgur und/oder Sepiolith als Zuschlagstoff; Wasser; Verflüssigungsmittel sowie Tensid gemischt und in einer an sich bekannten Dispergieranlage bei mindestens 0,3 bar Überdruck durch Druckluftzufuhr bei einer Temperatur zwischen Raumtemperatur und 95° C aufgeschäumt werden, wobei der Druck bis zum Austrag aus der Düse aufrechterhalten wird und ggf. zur Herstellung einer hochviskosen, thixotropen, eigenstabilen Schaumsuspension dem Verflüssigungsmittel entgegenwirkende Mittel eingesetzt werden, und daraufhin ggf. die geschäumte Mischung zu Tonformkörpern geformt wird, die Tonformkörper bei einer Temperatur zwischen Raumtemperatur und 200° C getrocknet werden, die getrockneten Tonformkörper ggf. zerkleinert und unter Rückführen des Feinteils zur Ausgangsmischung gesiebt werden und schließlich Tonformkörper bzw. die zerkleinerten Tonformkörper mit ausgewähltem Korngrößenbereich bei einer Produkttemperatur im Tonformkörper von mindestens 600° C gebrannt werden, zur Verwendung als Pflanzensubstrat, ein danach herstellbares Pflanzensubstrat sowie eine Verwendung dieses Produktes.

Aus der DE-C-37 05 204 ist ein Herstellungsverfahren der gattungsgemäßen Art bekannt, bei dem die Verfahrensführung zu einem als Pflanzensubstrat geeigneten Keramikgranulat führt, das deutlich verbesserte physikalische und chemische Eigenschaften aufweist. Trotz dieser vorteilhaften Eigenschaften bestand weiterhin das Bedürfnis, das nach dem bekannten Verfahren hergestellte Keramikmaterial, insbesondere im Hinblick auf seine innere Porosität, weiterzuentwickeln.

Der Erfindung liegt daher die Aufgabe zugrunde, daß bekannte Verfahren dahingehend weiterzubilden, daß eine weitere Verbesserung der porösen Struktur des als Pflanzensubstrat geeigneten Keramikgranulates erreichet werden kann, um dieses noch besser an seinen Verwendungszweck anpassen zu können.

Erfindungsgemäß wird diese Aufgabe dadurch gelöst, daß 25 bis 45 Gew.-% Ton, 0 bis 40 Gew.-% Kalkspat, Quarzsand, Dolomit, Feldspat, Schamotte, Kieselgur und/oder Sepiolith, 20 bis 55 Gew.-% Wasser, 0,1 bis 1,0 Gew.-% Verflüssigungsmittel sowie 0,1 bis 1,0 Gew.-% Tensid eingesetzt und die Tonförmkörper bzw. die zerkleinerten Tonformkörper mit einem Restfeuchtegehalt von 5 bis 25 % in einen vorgeheizten Ofen gegeben und bei einer vorbestimmten Produkttemperatur aus dem Bereich Zwischen 750 und 1050°C gebrannt werden.

In einer bevorzugten Ausführungsform der Erfindung wird für den Brennprozeß ein indirekt gefeuerter Drehrohrofen verwendet.

Dabei ist es besonders vorteilhaft, das gebrannte Produkt unmittelbar aus dem Brennofen in eine Kühltrommel zu über-führen, in die, parallel zu indirekter Kühlung mit Luft, Wasser direkt eingesprüht wird.

Überraschenderweise kann durch die erfindungsgemäß gewählten Mengen der Ausgangssubstanzen und Bedingungen beim Brennen der Tonformkörper deren poröse Innenstruktur deutlich weiterverbessert werden, was sich in einer gleichmäßigeren Porengrößenverteilung mit stabilerer Struktur und optimaler Kapillarwirkung zeigt, die gegenüber dem nach den bekannten Verfahren hergestellten Produkten überlegen ist. Dabei ergaben sich insbesondere für den Keramikfachmann überraschende Aspekte, da nicht zu erwarten gewesen war, daß (bei äußerst günstiger Wirtschaftlichkeit) eine bestimmte Kombination der Zusammensetzung der Ausgangsmaterialien sowie des Restfeuchtegehaltes der Tonformkörper vor dem Brennen und eine enge Auswahl des Temperaturbereichs eine weitere Verbesserung der Produkteigenschaften bewirken könnte.

Die vorteilhafterweise unmittelbar an das Brennen der Tonformkörper anschließende Sturzkühlung durch direkte Einsprühung von Wasser in die Kühltrommel, bei der das Produkt innerhalb von wenigen Minuten von etwa 1000°C auf bis zu 60°C abkühlt, ist für ein derartiges keramisches Material als extrem anzusehen, so daß es erstaunlich war, daß eine derartig schnelle Abkühlung, die natürlich aus wirtschaftlichen Gründen sehr interessant ist, zu keinerlei negativer Beeinflussung der Produkteigenschaften führte.

### BEISPIEL

400 kg Westerwälder Ton mit 10 % Restfeuchte werden mit 200 kg Wasser und 460 kg Feldspat mit 5 % Restfeuchte sowie 2 kg Natriumpolyphosphat und 4,5 kg Natriumdodecylsulfonat in einen Mischer gegeben, etwa 5 min stark gerührt und die entstehende, hoch thixotrope Tonsuspension in eine Formanlage geführt und in Strängen von 1 cm Durchmesser in eine Trocknungsvorrichtung gegeben. Nach erreichen des erwünschten Restfeuchtegehalts wird das Schaumtonmaterial in einen Walzenbrecher geleitet, in dem es Zerkleinert wird. Die verkleinerten Schaumtonpartikel werden anschließend in einer Siebanlage in eine Kornfraktion mit Größen Zwischen 1,0 und 5,0 mm, die zum Brennofen weitergeleitet wird, und eine Kornfraktion, die Korngrößen unterhalb von 1,0 mm aufweist und zur Ausgangsmischung Zurückgeführt wird, aufgetrennt. Die zum Brennofen weitergeleiteten Schaumtonteilchen werden in einen kontinuierlichen arbeitenden auf 750 bis 1050°C vorgeheizten Ofen eingebracht. Das gebrannte Keramikprodukt wird unmittelbar aus dem Brennofen in eine Kühltrommel überführt, in der, parallel zu indirekter Luftkühlung, direkt Wasser eingesprüht wird. Nach wenigen Minuten kann das Produkt bereits zur Verpackungsanlage weitergeleitet werden.

Die so hergestellten Materialien zeichnen sich durch folgende Materialparameter aus:
pH-Wert: 7,3 - 7,5
Wasseraufnahmevermögen: 150 - 190 Gew.-%
Innere Oberfläche: 100 - 200 m²/g
Porendurchmesser: < 0,8 mm

## Patentansprüche

1. Verfahren zum Herstellen eines porösen Keramikgranulates mit Porengrößen von < 1 mm, bei dem Ton; Kalkspat, Quarzsand, Dolomit, Feldspat, Schamotte, Kieselgur und/oder Sepiolith als Zuschlagstoff; Wasser; Verflüssigungsmittel sowie Tensid gemischt und in einer an sich bekannten Dispergieranlage bei mindestens 0,3 bar Überdruck durch Druckluftzufuhr bei einer Temperatur zwischen Raumtemperatur und 95° C aufgeschäumt werden, wobei der Druck bis zum Austrag aus der Düse aufrechterhalten wird und ggf. zur Herstellung einer hochviskosen, thixotropen, eigenstabilen Schaumsuspension dem Verflüssigungsmittel entgegenwirkende Mittel eingesetzt werden, und daraufhin ggf. die geschäumte Mischung zu Tonformkörpern geformt wird, die Tonformkörper bei einer Temperatur zwischen Raumtemperatur und 200° C getrocknet werden, die getrockneten Tonformkörper ggf. zerkleinert und unter Rückführen des Feinteils zur Ausgangsmischung gesiebt werden und schließlich Tonformkörper bzw. die zerkleinerten Tonformkörper mit ausgewähltem Korngrößenbereich bei einer Produkttemperatur zwischen 600°C und 1500°C gebrannt werden, zur Verwendung als Pflanzensubstrat oder als Depotträger für Nährstoffe, Düngestoffe und/oder Pestizide, **dadurch gekennzeichnet**, daß 25 bis 45 Gew.-% Ton, 0 bis 40 Gew.-% Kalkspat, Quarzsand, Dolomit, Feldspat, Schamotte, Kieselgur und/oder Sepiolith, 20 bis 55 Gew.-% Wasser, 0,1 bis 1,0 Gew.-% Verflüssigungsmittel sowie 0,1 bis 1,0 Gew.-% Tensid eingesetzt und die Tonformkörper bzw. die zerkleinerten Tonformkörper mit einem Restfeuchtegehalt von 5 bis 25 % in einer vorgeheizten Ofen gegeben und bei einer vorbestimmten Produkttemperatur aus dem Bereich zwischen 750 und 1050° C gebrannt werden.

2. Verfahren nach Anspruch 1, dadurch gekennzeichnet, daß für den Brennprozeß ein indirekt gefeuerter Drehrohrofen verwendet wird.

3. Verfahren nach Anspruch 1 oder 2, dadurch gekennzeichnet, daß das gebrannte Produkt unmittelbar aus dem Brennofen in eine Kühltrommel überführt wird, in die, parallel zu indirekter Kühlung mit Luft, Wasser direkt eingesprüht wird.

## Claims

1. Process for producing a porous granulated ceramic material having pore sizes of < 1 mm, in which clay, calcite, quartz sand, dolomite, feldspar, chamotte, kieselguhr and/or sepiolite as aggregate; water; fluidizer; and also a surfactant are mixed and are foamed in a dispersion unit known per se at a gauge pressure of at least 0.3 bar by passing in compressed air at a temperature between room temperature and 95°C, the pressure being maintained until discharge from the nozzle and fluidizer antagonists being optionally used to produce a highly viscous, thixotropic, intrinsically stable foam suspension, and the foamed mixture is then optionally moulded into shaped clay bodies, the shaped clay bodies are dried at a temperature between room temperature and 200°C, the dried shaped clay bodies are optionally comminuted and screened with recycling of the fines to the starting mixture and finally the shaped clay bodies or comminuted shaped clay bodies having a selected particle size range are fired at a product temperature between 600°C and 1500°C, for use as a plant substrate or as a depot carrier for nutrients, fertilizers and/or pesticides, characterized in that from 25 to 45% by weight of clay, from 0 to 40% by weight of calcite, quartz sand, dolomite, feldspar, chamotte, kieselguhr and/or sepiolite, from 20 to 55% by weight of water, from 0.1 to 1.0% by weight of fluidizer and from 0.1 to 1.0% by weight of surfactant are used and the shaped clay bodies or the comminuted shaped clay bodies containing from 5 to 25% of residual moisture are placed in a preheated furnace and are fired at a predetermined product temperature in the range between 750 and 1050°C.

2. Process according to Claim 1, characterized in that an indirectly fired rotary tube furnace is used for the firing process.

3. Process according to Claim 1 or 2, characterized in that the fired product is transferred directly from the firing furnace into a cooling drum into which water is directly sprayed in parallel with indirect cooling with air.

## Revendications

1. Procédé pour la fabrication d'un granulé de céramique poreux avec des tailes de pore < 1 mm dans lequel on mélange de l'argile; du calcaire, du sable de quartz, de la dolomite, du feldspat , de la chamotte, du kieselguhr et/ou de la sépiolithe comme additif; de l'eau, des fluidifiants ainsi que du tensioactif et on fait mousser dans une unité de mise en dispersion comme à au moins 0,3 bar de surpression par introduction d'air comprimé à une température comprise entre la température ambiante et 95°C, en maintenant la pression jusqu'à la sortie de la buse et le cas échéant on utilise un agent à effet contraire du fluidifiant pour obtenir une suspension de mousse stable, thixotrope et très visqueuse, et en outre le cas échéant on moule le mélange expansé en corps moulés d'argile, on sèche les corps moulés d'argile à une température comprise entrela température ambiante et 200°C, on broie le cas échéant les corps moulés en argile séchés et on recycle par tamisage les fines dans le mélange de départ et ensuite on calcine les corps moulés d'argile ou les corps moulés broyés à un intervalle de granulométrie sélectionné à une température de produit dans les corps moulés comprise entre 600°C et 1500°C pour l'utilisation comme substrat de plante, ou support de dépôt pour nutriements, engrais et/ou pesticides, caractérisé en ce qu'on utilise 25 à 45 % en poids d'argile, 0 à 40 % en poids de calcaire, de sable de quartz, de dolomite, de feldspat , de chamotte, de kieselgur et/ou de sépiolithe, 20 à 55 % en poids d'eau, 0,1 à 1,0 % en poids de fluidifiant ainsi que 0,1 à 1,0 % en poids de tensioactif et on place les corps moulés en argile ou les corps moulés broyés avec une teneur résiduelle en humidité de 5 à 25 % dans un four préchauffé et on calcule à une température de produit prédéterminée dans le domaine compris entre 750 et 1050°C.

2. Procédé selon la revendication 1, caractérisé en ce que pour le processus de calcination on utilise un four à tube rotatif chauffé indirectement.

3. Procédé selon les revendications 1 ou 2, caractérisé en ce qu'on transfère directement le produit calciné du four de calcination dans un tambour de refroidissement dans lequel on injecte directement de l'eau parallèlement au refroidissement indirect à l'air.
